# DEMANDE DE BREVET EUROPEEN

(11) **EP 1 213 656 A1**
(43) Date de publication de la demande: **12.06.2002**
(21) Numéro de dépôt: 01204605.8
(22) Date de dépôt: 29.11.2001
(51) Int. Cl.: G06F 13/40, G06F 7/00

(54) **Circuit d'inversion pour les conventions directes et indirectes d'un module electronique**

(30) Priorité: 05.12.2000 FR 0015749
(71) Demandeur: Koninklijke Philips Electronics N.V., 5621 BA Eindhoven (NL)
(72) Inventeur: Vincent, Yannick, 156, Boulevard Haussmann, 75008 Paris (FR)
(74) Mandataire: Chaffraix, Jean

(57) **Abrégé**

Un système de traitement de données comprend un microprocesseur, un dispositif de communication communiquant avec un module électronique destiné à envoyer au microprocesseur un signal de convention et un circuit d'inversion permettant d'inverser ou ne pas inverser l'ordre des bits d'un mot en fonction de la valeur du signal de convention lors d'un transfert du mot entre le module électronique et le microprocesseur.

Un tel système permet un gain de temps lors de l'opération de conversion des bits d'un mot en fonction de la convention utilisée, ce qui est bénéfique pour la contrainte temps réel. Le système concerné peut être appliqué, par exemple, dans un terminal utilisant une ou plusieurs cartes de type carte SIM, tel un téléphone portable.

## Description

### DOMAINE TECHNIQUE

L'invention concerne un système de traitement de données comprenant un microprocesseur et un dispositif de communication communiquant avec un module électronique destiné à envoyer au microprocesseur un signal de convention. L'invention peut être appliquée dans les systèmes utilisant un module électronique, comme les téléphones portables ou les applications bancaires. Dans ce cas le module électronique est généralement constitué par une carte de type carte SIM (SIM est l'abréviation de l'expression anglaise Subscriber Identity Module).

### ETAT DE LA TECHNIQUE ANTERIEURE

Un module électronique prend généralement la forme d'une carte à puce à microprocesseur qui s'insère dans un terminal ou qui est présente dans ce terminal. Dans un système utilisant un tel module électronique, un dispositif de communication permet la communication de données entre le module électronique et le microprocesseur du système.

L'architecture typique d'un dispositif de communication, tel que celui utilisé dans le circuit imprimé PCF5087x où le module électronique est une carte SIM, comprend une unité informatique et un dispositif de registres. Dans ce dispositif, le temps de traitement d'une opération joue un rôle important en ce qui concerne la contrainte temps réel. Le traitement informatique associé au dispositif de communication est critique pour cette contrainte temps réel, car il fait que le temps de traitement de certaines opérations est élevé.

### RESUME DE L'INVENTION

Un but de l'invention est de permettre une réduction du temps de traitement des opérations.

Selon l'invention, un système de traitement de données tel que défini dans le paragraphe d'ouverture comprend en outre un circuit d'inversion permettant d'inverser ou ne pas inverser l'ordre des bits d'un mot en fonction de la valeur du signal de convention lors d'un transfert de ce mot entre le module électronique et le microprocesseur.

L'invention prend les aspects suivants en considération. Lors d'une communication de données entre le module électronique et le microprocesseur, il existe deux conventions, directe et indirecte, la convention utilisée dépendant du type du module électronique. Ces deux conventions existent pour des raisons historiques et sont spécifiées dans la norme ISO7816-3. Si la convention directe est utilisée, l'ordre des bits d'un mot envoyé par le module électronique doit rester inchangé pour que ce mot soit traité par le microprocesseur. Si la convention indirecte est utilisée, l'ordre des bits d'un mot envoyé par le module électronique doit être inversé pour que ce mot soit traité par le microprocesseur. Cette opération nécessite un traitement par un dispositif de traitement qui doit être présent dans tous les systèmes utilisant un module électronique, puisque d'une part le type de module électronique présent ou inséré dans le système n'est pas connu a priori et d'autre part plusieurs dispositifs électroniques de types différents peuvent être présents ou insérés dans un même système.

Selon l'art antérieur, le dispositif de traitement permettant d'inverser ou ne pas inverser l'ordre des bits d'un mot en fonction de la convention lors d'un transfert de ce mot entre le module électronique et le microprocesseur possède les caractéristiques suivantes. Les mots échangés entre le module électronique et le microprocesseur sont des mots de 8 bits. Lorsque le module électronique envoie des données vers le microprocesseur, le premier mot envoyé est un mot TS de 8 bits qui indique si la convention utilisée est la convention directe ou la convention indirecte. Une unité informatique située entre le module électronique et le microprocesseur détecte, grâce à TS, la convention utilisée. Cette unité informatique contient un tableau de 256 mots de 8 bits, qui contient, pour chaque mot de 8 bits, son équivalent en convention indirecte, c'est à dire avec l'ordre des bits inversé. Si la convention détectée est la convention directe, l'unité informatique transmet au microprocesseur le mot reçu du module électronique sans le changer. Si la convention détectée est la convention indirecte, l'unité informatique transmet au microprocesseur l'équivalent en convention indirecte du mot reçu du module électronique. Les mots transmis au microprocesseur sont traités par le dispositif de registres à l'intérieur de l'unité de communication du microprocesseur. Lorsque le transfert de données se fait du microprocesseur vers le module électronique, le principe est le même que celui décrit ci-dessus. Ce dispositif de traitement nécessite une unité informatique qui rend la durée de ce traitement grande lors d'une communication de données entre le module électronique et le microprocesseur, ce qui est critique pour la contrainte temps réel.

Le principe suivant permet de réduire la durée du traitement dû à l'existence des deux conventions lors d'un transfert de mots entre le module électronique et le microprocesseur. Ce traitement est réalisé par un circuit de traitement (en anglais 'hardware', par opposition à 'software' lorsque le traitement est réalisé par une unité informatique). Lorsque le transfert de mots se fait du module électronique vers le microprocesseur, les mots de 8 bits transmis par le module électronique sont chargés dans un dispositif de registres de transfert, qui comprend deux registres à décalage, l'un à gauche, l'autre à droite. Ce dispositif de registres de transfert se situe dans le dispositif de communication. Un mot B (en anglais Bytes) de 8 bits chargé dans le dispositif de registres de transfert est chargé dans le registre à décalage à droite pour donner un mot RB et dans le registre à décalage à gauche pour donner un mot LB. Le mot RB est strictement identique au mot B alors que l'ordre des bits du mot LB est inversé par rapport à l'ordre des bits du mot B. Un bit de convention C est dérivé du mot TS transmis par le module électronique lors d'un transfert de données entre ce module électronique et le microprocesseur. Ce bit de convention C commande un circuit de sélection situé entre le registre à décalage à droite et le registre à décalage à gauche. Ce circuit de sélection permet, en fonction de la nature de la convention, directe ou indirecte, de charger le mot RB ou le mot LB dans un dispositif de registres verrouillé qui se trouve dans l'unité de communication du microprocesseur. Lorsque le transfert de données se fait du microprocesseur vers le module électronique, les mots de 8 bits contenus dans le dispositif de registres verrouillé sont chargés dans le registre à décalage à droite et dans le registre à décalage à gauche du dispositif de registres de transfert du dispositif de communication. Un autre circuit de sélection commandé par le bit C de convention permet, en fonction de la convention, de sélectionner soit le mot stocké dans le registre à décalage à droite, soit le mot stocké dans le registre à décalage à gauche, qui sera envoyé vers le module électronique. Ce circuit de traitement permet d'obtenir un gain de temps par rapport au traitement réalisé par l'unité informatique, qui sera d'autant plus élevé que le nombre de mots échangés par seconde entre le module électronique et le microprocesseur sera élevé.

L'invention et des caractéristiques additionnelles qui peuvent être utilisées avec avantage pour mettre en oeuvre l'invention, seront décrites ci-dessous plus en détail par référence à des figures.

### BREVE DESCRIPTION DES FIGURES

La figure 1 est un diagramme conceptuel illustrant les caractéristiques de l'invention ;
La figure 2 illustre un signal utilisé pour détecter la convention ainsi que la génération du bit de convention ;
La figure 3 est un diagramme bloc illustrant une utilisation de l'invention dans un système de transfert de données entre un module électronique et une mémoire primaire ;
La figure 4 illustre un exemple de réalisation d'un circuit d'inversion pour un transfert de données d'un module électronique vers un microprocesseur ;
La figure 5 illustre un exemple de réalisation d'un aiguilleur utilisé dans un circuit d'inversion pour un transfert de données d'un module électronique vers un microprocesseur ;
La figure 6 illustre un exemple de réalisation d'un circuit d'inversion pour un transfert de données d'un microprocesseur vers un module électronique.

### MODE DE REALISATION DE L'INVENTION

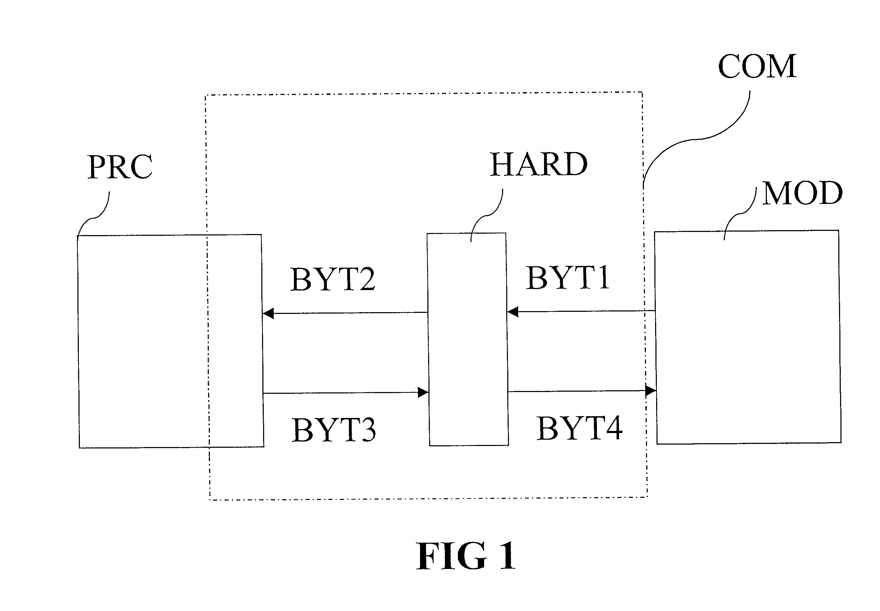

La figure 1 illustre des caractéristiques de l'invention décrites précédemment. Un système de traitement de données comprend un dispositif de communication [COM] communiquant avec un module électronique [MOD], un circuit d'inversion [HARD] et un microprocesseur [PRC].

Le module électronique [MOD] est présent ou inséré dans un terminal et contient des informations relatives à l'abonné. Par exemple, le module électronique [MOD] permet de gérer la mémoire dédiée à l'utilisateur, d'intégrer des mécanismes de sécurité ou de réaliser des paiements à distance. Afin de traiter les informations contenues dans le module électronique [MOD], le terminal possède le microprocesseur [PRC] qui échange des données avec le module électronique [MOD] grâce au dispositif de communication [COM]. Pour l'échange de données, il existe deux conventions, une directe et une indirecte. Le circuit [HARD] permet de tenir compte de ces deux conventions lors d'un échange de données entre le module électronique [MOD] et le microprocesseur [PRC]. Lorsqu'un premier mot de données [BYT1] est transmis du module électronique [MOD] vers le microprocesseur [PRC], il est traité par le circuit d'inversion [HARD] qui envoie au microprocesseur un deuxième mot de données [BYT2]. Dans le cas où la convention utilisée est la convention directe, le deuxième mot de données [BYT2] est identique au premier mot de données [BYT1]. Dans le cas où la convention utilisée est la convention indirecte, l'ordre des bits du deuxième mot de données [BYT2] est inversé par rapport à l'ordre des bits du premier mot de données [BYT1]. Lorsqu'un troisième mot de données [BYT3] est transmis du microprocesseur [PRC] vers le module électronique [MOD], il est traité par le circuit d'inversion [HARD] qui envoie au module électronique [MOD] un quatrième mot de données [BYT4]. Dans le cas où la convention utilisée est la convention directe, le quatrième mot de données [BYT4] est identique au troisième mot de données [BYT3]. Dans le cas où la convention utilisée est la convention indirecte, l'ordre des bits du quatrième mot de données [BYT4] est inversé par rapport à l'ordre des bits du troisième mot de données [BYT3].

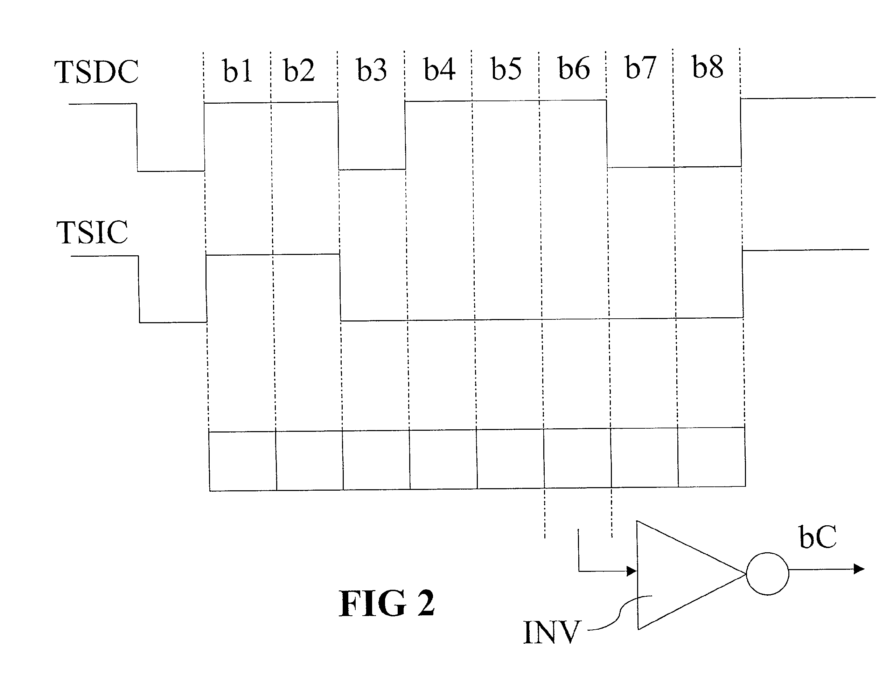

La figure 2 illustre un signal de convention directe [TSDC] ainsi qu'un signal de convention indirecte [TSIC] émis par un module électronique lors d'une communication de données avec un microprocesseur. Chacun de ces signaux est un mot de 8 bits numérotés du premier au huitième [b1-b8]. Les bits [b4], [b5] et [b6] codent pour la convention. Lorsque les bits [b4], [b5] et [b6] valent 1, la convention utilisée est la convention directe. Lorsque les bits [b4], [b5] et [b6] valent 0, la convention utilisée est la convention indirecte.

La figure 2 illustre également comment un bit de convention [bC] est généré à partir du signal [TSDC] ou du signal [TSIC]. Le bit [b6] est appliqué à l'entrée d'un inverseur [INV]. La sortie de cette inverseur [INV] est le bit de convention [bC]. Ce bit de convention [bC] vaut 0 lorsque la convention utilisée est la convention directe et vaut 1 lorsque la convention utilisée est la convention indirecte.

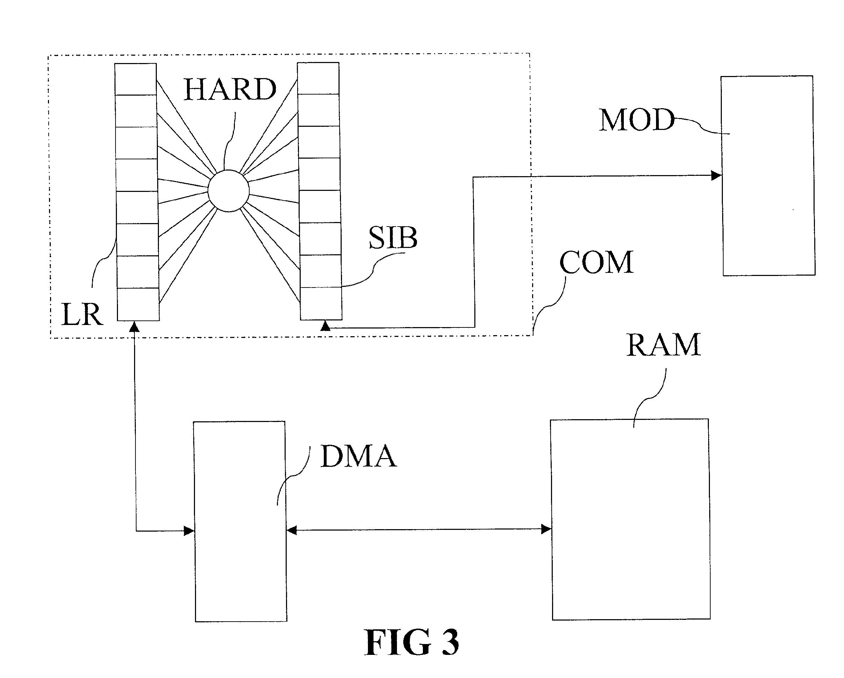

La figure 3 illustre une utilisation de l'invention dans un système de transfert de données entre un module électronique [MOD] et une mémoire primaire. Le système de transfert de données comprend une unité de communication [COM] comprenant un dispositif de registres de transfert [SIB], un registre verrouillé [LR] et un circuit d'inversion [HARD], une mémoire directe [DMA] (DMA est l'abréviation de l'expression anglaise Direct Access Memory) et une mémoire primaire [RAM] (RAM est l'abréviation de l'expression anglaise Random Access Memory).

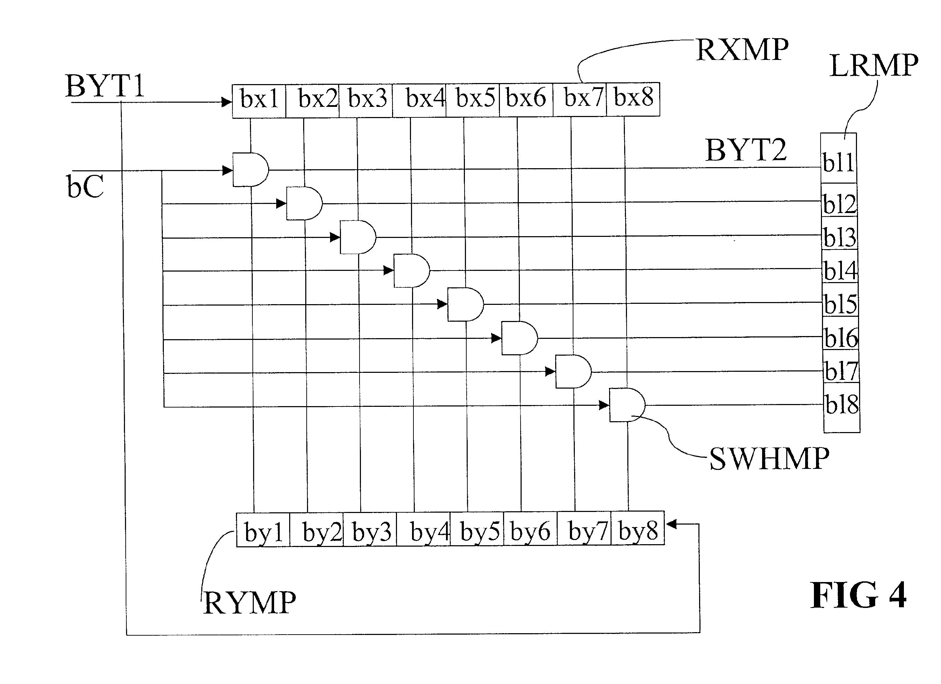

Lorsque le transfert de données se fait du module électronique [MOD] vers la mémoire primaire [RAM], un mot de 8 bits est transmis en série du module électronique [MOD] vers le dispositif de registres de transfert [SIB], dont un des rôles est d'effectuer une conversion série parallèle. Le circuit d'inversion [HARD] permet d'inverser ou ne pas inverser l'ordre des bits du mot à la sortie de ce dispositif de registres de transfert [SIB], en fonction de la convention utilisée. Le fonctionnement de ce circuit d'inversion [HARD] sera précisé plus en détail dans les figures 4, 5 et 6. Le mot est alors envoyé en parallèle vers le registre verrouillé [LR] dont le rôle est de recevoir les mots issus du dispositif de registres de transfert [SIB] avant que ceux-ci ne soient utilisés par la mémoire primaire [RAM]. La mémoire directe [DMA] vient extraire le mot stocké dans le registre verrouillé [LR], pour l'envoyer dans la mémoire primaire [RAM]. Lorsque le transfert de données se fait de la mémoire primaire [RAM] vers le module électronique [MOD], le principe est le même que celui décrit ci-dessus. Dans ce cas, un des rôles du dispositif de registres de transfert [SIB] est de réaliser une conversion parallèle série.

La figure 4 illustre un circuit d'inversion pour un transfert de données d'un module électronique vers un microprocesseur. Le circuit d'inversion comprend un registre module-microprocesseur à décalage à droite [RXMP], un registre module-microprocesseur à décalage à gauche [RYMP], un registre module-microprocesseur verrouillé [LRMP] et 8 aiguilleurs module-microprocesseur [SWHMP]. Sur la figure, seul un aiguilleur module-microprocesseur [SWHMP] a été référencé pour des raisons de convenance. Les 7 autres aiguilleurs module-microprocesseur [SWHMP] sont identiques et représentés par des symboles identiques.

Le premier mot de données [BYT1] de 8 bits numérotés du premier au huitième (b1,b8) est transmis en série par le module électronique vers le dispositif de registres de transfert. II est alors chargé dans le registre module-microprocesseur à décalage à droite [RXMP] ainsi que dans le registre module-microprocesseur à décalage à gauche [RYMP]. Le registre module-microprocesseur à décalage à droite [RXMP] est destiné à contenir des mots de 8 bits numérotés du premier au huitième [bx1,bx8]. Le registre module-microprocesseur à décalage à gauche [RYMP] est destiné à contenir des mots de 8 bits numérotés du premier au huitième [by1,by8]. Lorsque le premier mot de données [BYT1] est chargé dans le registre module-microprocesseur à décalage à droite [RXMP], le bit [bx1] est égal au bit b1, le bit [bx2] est égal au bit b2 et ainsi de suite jusqu'au bit [bx8] qui est égal au bit b8. Lorsque le premier mot de données [BYT1] est chargé dans le registre module-microprocesseur à décalage à gauche [RYMP], le bit [by1] est égal au bit b8, le bit [by2] est égal au bit b7 et ainsi de suite jusqu'au bit [by8] qui est égal au bit b1, c'est à dire que l'ordre des bits est inversé. L'aiguilleur module-microprocesseur [SWHMP] numéro n (n étant un nombre entier compris entre 1 et 8) a pour commande le bit de convention [bC] et a pour entrées le bit bxn et le bit byn. Dans le cas où la convention utilisée est directe, c'est à dire dans le cas où le bit de convention [bC] vaut 0, la sortie bsn de l'aiguilleur module-microprocesseur [SWHMP] numéro n est le bit bxn. Dans le cas où la convention utilisée est indirecte, c'est à dire dans le cas où le bit de convention [bC] vaut 1, la sortie bsn de l'aiguilleur module-microprocesseur [SWHMP] numéro n est le bit byn. Les 8 bits numérotés du premier au huitième (bs1,bs8) forment le deuxième mot de données [BYT2]. Chaque bit bsn est chargé en parallèle dans le registre module-microprocesseur verrouillé [LRMP] destiné à contenir des mots de 8 bits numérotés du premier au huitième [bl1,bl8]. Le bit bl1 est alors égal au bit bs1, le bit bl2 est égal au bit bs2 et ainsi de suite jusqu'au bit bl8 qui est égal au bit bs8.

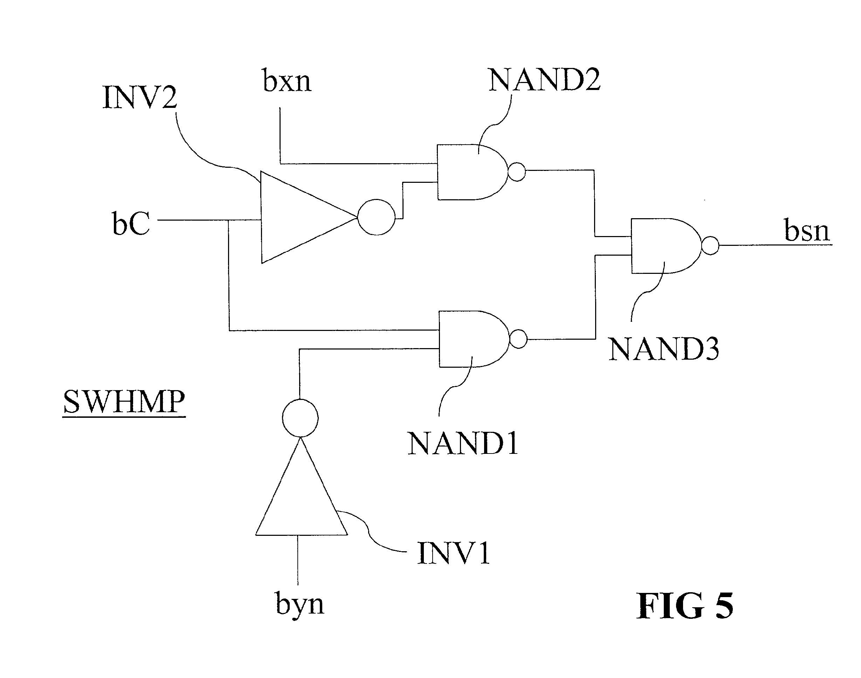

La figure 5 illustre un exemple d'aiguilleur module-microprocesseur [SWHMP] utilisé dans un circuit d'inversion pour un transfert de données d'un module électronique vers un microprocesseur. L'aiguilleur module-microprocesseur [SWHMP] comprend une première porte NAND [NAND1], une deuxième porte NAND [NAND2], une troisième porte NAND [NAND3], un premier inverseur [INV1] et un deuxième inverseur [INV2].

Le fonctionnement de cet aiguilleur module-microprocesseur [SWHMP] est le suivant. Le bit [byn] traverse le premier inverseur [INV1]. La sortie de ce premier inverseur [INV1] ainsi que le bit de convention [bC] sont appliqués aux entrées de la première porte NAND [NAND1]. Le bit de convention [bC] est appliqué à l'entrée du deuxième inverseur [INV2]. La sortie de ce deuxième inverseur [INV2] ainsi que le bit [bxn] sont appliqués aux entrées de la deuxième porte NAND [NAND2]. Les sorties de la première porte NAND [NAND1] et de la deuxième porte NAND [NAND2] sont appliquées aux entrées de la troisième porte NAND [NAND3]. Le bit de sortie de cette troisième porte NAND [NAND3] est le bit [bsn]. Lorsque la convention utilisée est la convention directe, le bit de convention [bC] vaut 0. Aux entrées de la première porte NAND [NAND1] sont appliqués l'inverse logique du bit [byn] ainsi que le bit de convention [bC] qui vaut 0. La sortie de la première porte NAND [NAND1] vaut donc 1, quelle que soit la valeur du bit [byn]. Aux entrées de la deuxième porte NAND [NAND2] sont appliqués l'inverse logique du bit de convention [bC], c'est à dire 1, ainsi que le bit [bxn]. La sortie de la deuxième porte NAND [NAND2] est donc égale à l'inverse logique du bit [bxn]. Par conséquent, la sortie de la troisième porte NAND [NAND3], c'est à dire le bit [bsn], est égale au bit [bxn]. Lorsque la convention utilisée est la convention indirecte, le bit de convention [bC] vaut 1. Aux entrées de la première porte NAND [NAND1] sont appliqués l'inverse logique du bit [byn] ainsi que le bit de convention [bC] qui vaut 1. La sortie de la première porte NAND [NAND1] est donc égale au bit [byn]. Aux entrées de la deuxième porte NAND [NAND2] sont appliqués l'inverse logique du bit de convention [bC], c'est à dire 0, ainsi que le bit [bxn]. La sortie de la deuxième porte NAND [NAND2] vaut donc 1, quelle que soit la valeur du bit [bxn]. Par conséquent, la sortie de la troisième porte NAND [NAND3], c'est à dire le bit [bsn], est égale à l'inverse logique du bit [byn].

L'aiguilleur module-microprocesseur [SWHMP] illustré sur cette figure permet, lorsque la convention utilisée est indirecte, d'inverser à la fois l'ordre et la valeur des bits d'un mot. Un autre aiguilleur permettant d'inverser seulement l'ordre des bits d'un mot peut être dérivé de cet aiguilleur module-microprocesseur [SWHMP], en enlevant le premier inverseur [INV1].

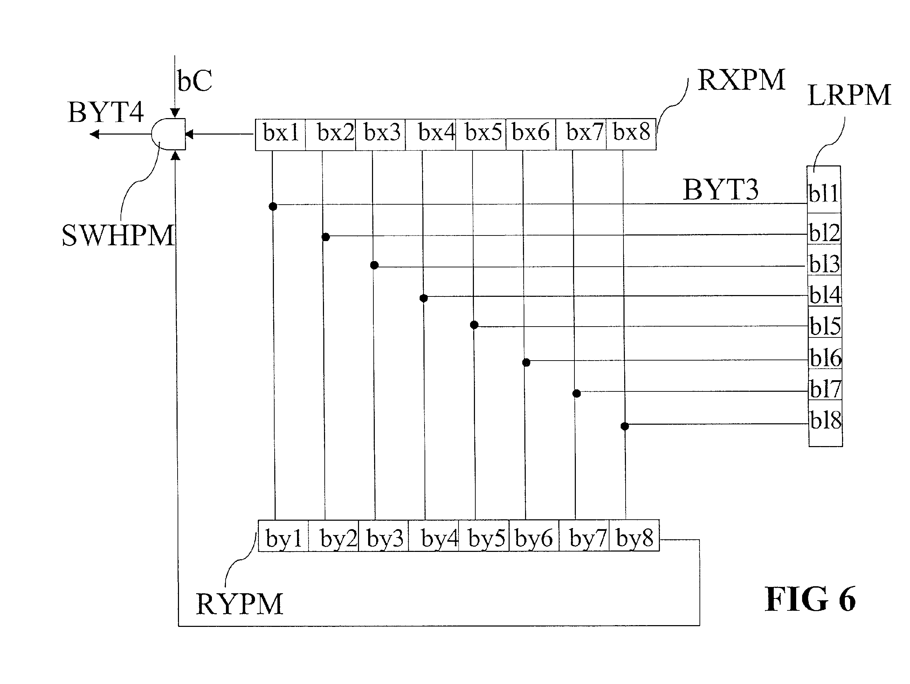

La figure 6 illustre un circuit d'inversion pour un transfert de données d'un microprocesseur vers un module électronique. Le circuit d'inversion comprend un registre microprocesseur-module à décalage à gauche [RXPM], un registre microprocesseur-module à décalage à droite [RYPM], un registre microprocesseur-module verrouillé [LRPM] et un aiguilleur microprocesseur-module [SWHPM]. Le mot de données à envoyer du microprocesseur vers le module électronique est stocké dans le registre microprocesseur-module verrouillé [LRPM]. Ce mot de données est le troisième mot de données [BYT3] de 8 bits numérotés du premier au huitième [bl1,bl8]. Pour être acheminé vers le module électronique, ce mot est d'abord chargé en parallèle dans le registre microprocesseur-module à décalage à gauche [RXPM] ainsi que dans le registre microprocesseur-module à décalage à droite [RYPM]. Le registre microprocesseur-module à décalage à gauche [RXPM] est destiné à contenir des mots de 8 bits numérotés du premier au huitième [bx1,bx8]. Le registre microprocesseur-module à décalage à droite [RYPM] est destiné à contenir des mots de 8 bits numérotés du premier au huitième [by1,by8]. Lorsque le troisième mot de données [BYT3] est chargé dans le registre microprocesseur-module à décalage à gauche [RXPM], le bit [bx1] est égal au bit b1, le bit [bx2] est égal au bit b2 et ainsi de suite jusqu'au bit [bx8] qui est égal au bit b8. Lorsque le troisième mot de données [BYT3] est chargé dans le registre microprocesseur-module à décalage à droite [RYPM], le bit [by1] est égal au bit b1, le bit [by2] est égal au bit b2 et ainsi de suite jusqu'au bit [by8] qui est égal au bit b8. L'aiguilleur microprocesseur-module [SWHPM] a pour commande le bit de convention [bC] et reçoit en série à l'une de ses entrées le mot de données stocké dans le registre microprocesseur-module à décalage à gauche [RXPM], qui est identique au troisième mot de données [BYT3] et à l'autre entrée le mot de données stocké dans le registre microprocesseur-module à décalage à droite [RYPM], dont l'ordre des bits est inversé par rapport à l'ordre des bits du troisième mot de données [BYT3]. Cet aiguilleur microprocesseur-module [SWHPM] traite les bits de chacun de ses mots l'un après l'autre, c'est à dire qu'il aura pour entrées le bit [bx1] et le bit [by8] puis le bit [bx2] et le bit [by7] et ainsi de suite jusqu'à ce qu'il ait pour entrées le bit [bx8] et le bit [by1]. Cet aiguilleur microprocesseur-module [SWHPM] est identique à l'aiguilleur module-microprocesseur [SWHMP] décrit sur la figure 4. Supposons que l'aiguilleur microprocesseur-module [SWHPM] ait pour entrées le bit bxn et le bit by(9-n), par exemple b3 et b6. Dans le cas où la convention utilisée est directe, c'est à dire dans le cas où le bit de convention [bC] vaut 0, la sortie de l'aiguilleur microprocesseur-module [SWHPM] est le bit bxn. Dans le cas où la convention utilisée est indirecte, c'est à dire dans le cas où le bit de convention [bC] vaut 1, la sortie de l'aiguilleur microprocesseur-module [SWHPM] est l'inverse logique du bit by(9-n). Les 8 bits consécutifs de sortie de l'aiguilleur microprocesseur-module [SWHPM] forment le quatrième mot de données [BYT4]. La remarque faite à la fin de la description de la figure 5 s'applique également ici : il est possible d'utiliser un autre aiguilleur microprocesseur-module, afin d'inverser seulement l'ordre des bits d'un mot lorsque la convention utilisée est indirecte.

Le système de traitement de données illustré aux figures 3 à 6 est un exemple d'application des caractéristiques illustrées à la figure 1.

La description ci-dessus en référence aux figures illustre l'invention plutôt qu'elle ne la limite. Il est évident qu'il existe de nombreuses alternatives qui rentrent dans la portée des revendications ci-jointes. A cet égard, quelques remarques sont faites en conclusion.

Il existe de nombreuses manières pour inverser ou ne pas inverser l'ordre des bits d'un mot en fonction de la convention lors d'un transfert de données entre le module électronique et le microprocesseur. Les figures 3 à 6 illustrent seulement une mise en oeuvre possible dans laquelle 2 registres à décalage ainsi qu'un circuit d'inversion sont utilisés pour réaliser cette fonction. Il est possible d'utiliser d'autres circuits éventuellement plus complexes pour réaliser cette fonction.

## Revendications

1. , Système de traitement de données comprenant
- un microprocesseur [PRC] et
- un dispositif de communication [COM] communiquant avec un module électronique [MOD] destiné à envoyer au microprocesseur un signal de convention **caractérisé en ce que** le système de traitement de données comprend un circuit d'inversion [HARD] permettant d'inverser ou ne pas inverser l'ordre des bits d'un mot en fonction de la valeur dudit signal de convention lors d'un transfert dudit mot entre le module électronique [MOD] et le microprocesseur [PRC].

2. Système de traitement de données selon la revendication 1 **caractérisé en ce que** ledit module électronique [MOD] est une carte de type carte SIM.

3. Système de traitement de données selon la revendication 1 **caractérisé en ce que** ledit circuit d'inversion [HARD] permet d'inverser ou ne pas inverser la valeur des bits dudit mot en fonction de la valeur dudit signal de convention.

4. Système de traitement de données selon la revendication 1, **caractérisé en ce que** ledit circuit d'inversion [HARD] comprend des aiguilleurs [SWHMP] et [SWHPM], des registres à décalage à droite [RXMP] et [RYPM] et des registres à décalage à gauche [RYMP] et [RXPM].

5. Terminal comprenant
- un microprocesseur [PRC] et
- un dispositif de communication [COM] communiquant avec un module électronique [MOD] destiné à envoyer au microprocesseur un signal de convention **caractérisé en ce que** le terminal comprend un circuit d'inversion [HARD] permettant d'inverser ou ne pas inverser l'ordre des bits d'un mot en fonction de la valeur dudit signal de convention lors d'un transfert dudit mot entre le module électronique [MOD] et le microprocesseur [PRC].

6. Terminal selon la revendication 5 **caractérisé en ce que** ledit module électronique [MOD] est une carte de type carte SIM.

7. Terminal selon la revendication 5 **caractérisé en ce que** ledit circuit d'inversion [HARD] permet d'inverser ou ne pas inverser la valeur des bits dudit mot en fonction de la valeur dudit signal de convention.

8. Terminal selon la revendication 5, **caractérisé en ce que** ledit circuit d'inversion [HARD] comprend des aiguilleurs [SWHMP] et [SWHPM], des registres à décalage à droite [RXMP] et [RYPM] et des registres à décalage à gauche [RYMP] et [RXPM].
